# EUROPEAN PATENT SPECIFICATION

(11) **EP 1 732 347 B1**
(45) Date of publication and mention of the grant of the patent: **31.10.2012**
(21) Application number: 06011900.5
(22) Date of filing: 09.06.2006
(51) Int. Cl.: H04W 36/18

(54) **Method for triggering handover of a mobile terminal and system thereof**
Verfahren zum Auslösen eines Weiterreichens eines mobilen Endgerätes und System dafür
Procédé pour déclencher un transfert d'un terminal mobile et système correspondant

(30) Priority: 10.06.2005 KR 20050050018; 13.06.2005 KR 20050050581
(43) Date of publication of application: 13.12.2006
(73) Proprietor: LG Electronics Inc., Yongdungpo-Gu Seoul (KR)
(72) Inventor: Yang, Man-Suk, 60-39, Gasan-Dong, Geumcheon-Gu, Seoul (KR)
(74) Representative: TER MEER - STEINMEISTER & PARTNER GbR

(56) References cited:
- EP-A- 1 465 369
- US-A1- 2004 038 681
- US-A1- 2004 064 581
- US-B1- 6 256 501
- US-B1- 6 721 564

## Description

### BACKGROUND OF THE INVENTION

### 1. Field of the Invention

The present invention relates to a mobile terminal, and more particularly, to a method and system for triggering a handover operation of a mobile terminal.

### 2. Description of the Related Art

A mobile terminal utilizing a universal mobile telecommunications system (UMTS) and a wideband code division multiple access (WCDMA) technique performs a handover operation when a signal strength of a currently controlling base station weakens. In addition, the handover operation is an operation where the mobile terminal switches control to a new base station when moving into a new cell. Thus, in the handover operation, the mobile terminal maintains call communication while traveling between different cells. In more detail, when the mobile terminal is moving away from a first base station towards a second base station, the signal strength between the first base station and the mobile terminal becomes weaker, and the signal strength between the second base station and the mobile terminal becomes stronger. Thus, when the signal strength between the second base station and the mobile terminal is greater than the signal strength between the first base station and the mobile terminal, the mobile terminal is switched to the second base station.

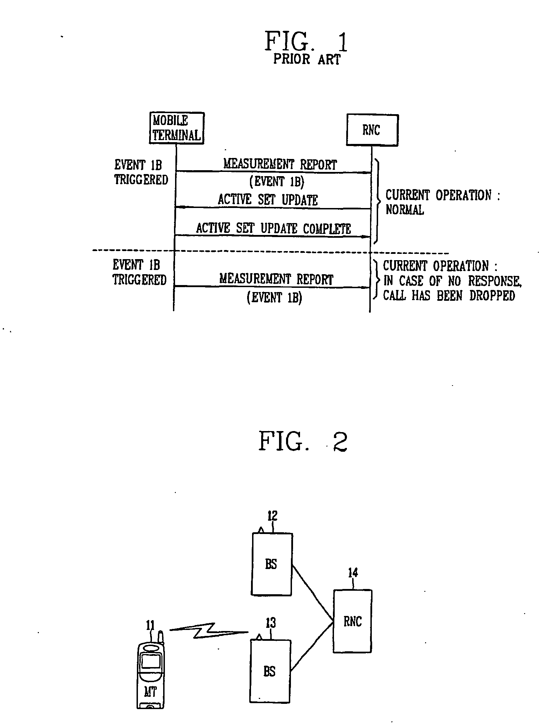

For example, FIG. 1 is a flow diagram illustrating a handover operation in accordance with the related art. As shown in FIG. 1, when the mobile terminal is transitioning between first and second cells corresponding to first and second base stations and the signal strength between the mobile terminal and the first base station falls below a threshold level, the mobile terminal transmits a message such as a handover measurement report to a radio network controller (RNC) requesting a handover operation (EVENT 1 B) to the second base station having a stronger signal strength.

Then, the RNC updates an active set of the mobile terminal in response to the handover measurement report. The active set is updated to include the new base station B. The RNC then transmits an active set update message including the new second page station B to the mobile terminal. Further, the handover operation is a soft handover (SHO) operation. Upon receiving the active set update message from the RNC, the mobile terminal transmits an active set update complete message to the RNC to complete the handover operation to the new second base station having the stronger signal strength.

In addition, during the handover operation, the mobile terminal transmits the measurement report to the RNC only once. Thus, as shown in the bottom of FIG. 1, if the measurement report message is not processed by the RNC or is lost, the call may be disconnected. That is, the signal strength between the first base station and the mobile terminal may become so weak that the call is disconnected before the handover operation is successfully completed. U.S. Patent Nos. 6,615,044, 6,845,238 and 6,879,831 also disclose related art handover methods.

US 6,256,501 B1 describes a mobile communication system describing a hand-off procedure, wherein a mobile station sends a hand-off request to the serving base station and if no response is received from the base station after a preset time, the mobile station retransmits the hand-off request signal a predetermined number of times until it receives a hand-off order from the serving base station control office.

US 2004/0038681 A1 describes a handover processing method for a mobile communication system; wherein the mobile transmits a measuring report to the RNC layer, which further transmits the measuring report to the RNC. A timer is operated when a radio link set is changed, wherein the radio link set is changed back to the previously backed up radio link set, when a reply signal is not received from the RNC even though the operation time of the timer expires.

US 2004/0064581 A1 describes a data forwarding controller communication terminal, which is capable of implementing uninterrupted communication during performing a handover process. A handover start message is transmitted to an uplinked switch immediately before performing a handover, when the mobile node intends to switch to a next access point. When the mobile node fails to receive the handover setting completion message even after a predetermined time has passed from its having transmitting the handover start message, it retransmits the handover start message.

### SUMMARY OF THE INVENTION

Therefore, one object of the present invention is to efficiently perform a handover operation by re-transmitting the handover request message to the RNC if a response to the message is not received from the RNC during a predetermined time.

Another object of the present invention is to transmit a handover request message to the RNC requesting handover to a second base station when the mobile terminal had recently been handed over to a first base station, but that the second base station now has the stronger signal strength.

The objects are solved by the features of the independent claims.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements, wherein:

FIG. 1 is a flow diagram showing a method for triggering a handover operation of a mobile terminal in accordance with the related art;

FIG. 2 is an overview showing a system for triggering a handover operation of a mobile terminal in accordance with the present invention;

FIG. 3 is a flow diagram showing a method for triggering a handover operation of a mobile terminal in accordance with a first embodiment of the present invention;

FIG. 4 is a flow diagram showing a method for triggering a handover operation of a mobile terminal in accordance with a second embodiment of the present invention; and

FIG. 5 is a block diagram showing a system for triggering a handover operation in accordance with the second embodiment of the present invention.

### DETAILED DESCRIPTION OF THE INVENTION

A method for triggering a handover operation of a mobile terminal in accordance with preferred embodiments of the present invention will now be described with reference to the drawings.

In more detail, FIG. 2 is an overview showing a system for triggering a handover operation of a mobile terminal in accordance with the present invention. As shown, the system includes a mobile terminal (MT) 11, a first base station (BS) 12, a second base station (BS) 13 and an RNC 14. The RNC 14 controls the BSs 12 and 13, and FIG.2 illustrates the MT 11 being in communication with the second BS (cell) 13.

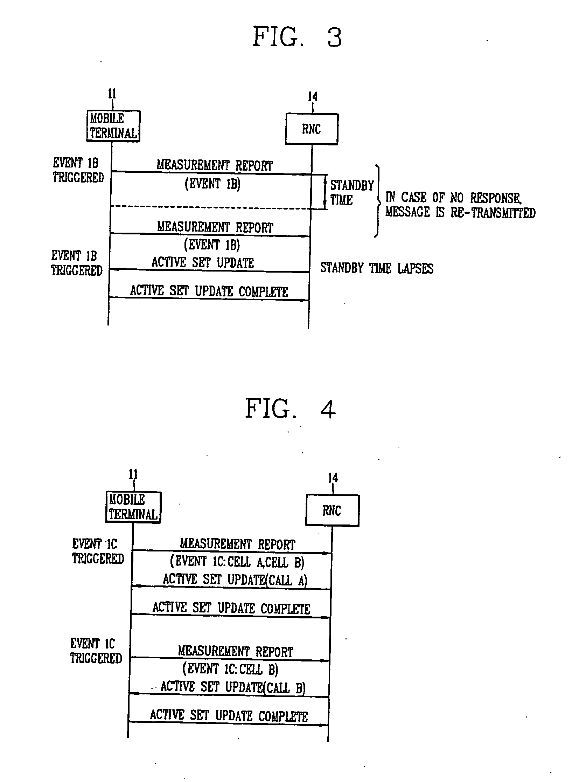

Turning next to FIG. 3, which is a flow diagram showing a method for triggering a handover operation of a mobile terminal in accordance with a first embodiment of the present invention. FIG. 2 will also be referred to in this description. As shown in FIG. 3, the MT 11 transmits a message requesting a handover operation to the RNC 14 when a handover event occurs based on a signal strength between the MT 11 and the BS 13. For example, if the MT 11 is moving towards the BS 12, the signal strength between the MT 11 and the BS 13 will become weaker and the signal strength between the MT 11 and BS 12 will become stronger. Thus in this instance, the MT 11 requests a handover operation to the BS 12 by transmitting a measurement report message to the RNC 14.

That is, the handover operation refers to a function that when the mobile terminal in a call communication state is out of a pertinent base station service area (cell boundary) and moves to a neighbor base station service area, the signal strength between the pertinent base station and the mobile terminal becomes weak. Therefore, to maintain the current call state, the MT 11 is automatically tuned to a new traffic channel of the neighboring base station via the handover operation. That is, the MT 11 is wirelessly linked to the neighboring base station to maintain the communication link.

In addition, as shown in FIG. 3, the MT 11 determines whether or not a response has been received from the RNC 14 within a pre-set standby time (e.g., one or two seconds). If a response is not received within the pre-set standby time, the MT 11 re-transmits the message requesting the handover operation to the RNC 14.

However, if a response to the handover measurement report is received from the RNC 14 within the pre-set time, the MT 11 performs the handover operation. In more detail, the RNC 14 updates an active set of the MT 11 in response to the handover measurement report and transmits the updated active set to the MT 11. In the example above, when the MT 11 is moving towards the BS 12, the active set would include the BS 12 in place of the BS 13 so that the MT 11 switches over to the BS 12. Namely, the MT 11 releases the radio link with the BS 13 and wirelessly links with the BS 12. In addition, when the MT 11 successfully receives the active set update message from the RNC 14 and successfully performs the handover operation, the MT 11 transmits an active set update complete message to the RNC 14, thereby terminating the triggering of the handover operation of the MT 11.

Thus, when the handover measurement report message transmitted by the MT 11 to the RNC 14 is lost due to a network error, for example, such that the RNC 14 does not receive the message, the RNC cannot transmit an appropriate response to the MT 11. However, in accordance with the embodiment of the present invention shown in FIG. 3, when there is no response to the handover event (EVENT 1 B) during a specific time, the MT 11 re-transmits the message requesting the handover operation to thereby prevent the call from being dropped.

Turning next to FIG. 4, which is a flow diagram showing a method for triggering a handover operation of a mobile terminal in accordance with a second embodiment of the present invention. In FIG. 4, the signal strength between the MT 11 and its controlling base station is becoming weaker, so the MT 11 transmits a measurement report to the RNC 14 requesting a handover procedure. In this instance, the measurement report includes information (e.g., a signal strength) of first and second base stations A and B. Then, as shown in FIG. 4, the RNC 14 transmits an active set update message to the MT 11 including the base station A, because at that time, the base station A has the stronger signal strength (i.e., the signal strength of the base station A is greater than the signal strength of the base station B).

However, in the related art, the RNC 14 allows the handover operation only with respect to the first base station A having the strongest signal strength. Therefore, when a leaving triggering condition with respect to the second base station B is not satisfied (e.g., the signal strength between the MT 11 and the second base station B is not below a predetermined threshold), the RNC 14 does not allow a periodical report of the handover event (EVENT 1 C) for the base station B because the handover has occurred with the Base Station A (i.e., the RNC has transmitted the active set update message including the base Station A to the MT 11). That is, the RNC 14 has determined the signal strength of the base station A is the strongest and thus does not allow the MT 11 to connect with the base station B (the RNC does not allow the periodical report of the handover event C regarding the base station B).

Thus, even though the signal strength of the second base station B turns out to be the strongest immediately after the RNC 14 has just determined the base station A has the strongest signal strength, the MT 11 does not transmit a handover measurement report for handover with the second base station B. Therefore, the MT 11 cannot perform handover with the second base station B. Thus, when the signal strengths of the other neighboring base stations than the second base station B become weak, the MT 11 can not handover to the base station B and the call is dropped.

However, in accordance with an embodiment of the present invention, the call is prevented from being dropped by automatically wirelessly linking the MT 11 with the second base station B when the signal strengths of the other neighboring base stations become weak. That is, as shown in FIG. 4, the active set update message sent from the RNC 14 to the MT 11 only includes the base station A (i.e., the second base station B is not included in the active set). In this instance, and when the leaving triggering condition with respect to the base station B is not met, and when the signal strength of the second base station B becomes the strongest, the MT 11 re-transmits a measurement report for handover with the second base station B even though the RNC 14 does not allow periodically reporting of the handover event (EVENT 1 C). In more detail, after the initial handover operation to the base station A in which the base station A has the stronger signal strength than the base station B, the handover event 1C occurs again because the signal strength of the base station has become the strongest. In this instance, the MT retransmits a measurement report including the base station B to the RNC to perform handover with respect to the base station B.

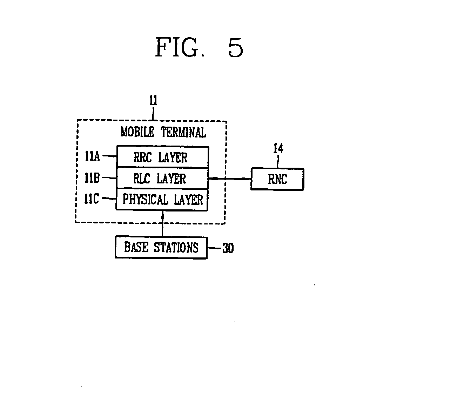

Turning next to FIG. 5, which is a block diagram showing a system for triggering a handover operation in accordance with the second embodiment of the present invention. As shown, the system includes the MT 11 for receiving signals from a plurality of base stations 30, for measuring a strength of the received signals, and for transmitting a handover measurement report requesting a handover operation with a second base station even though the RNC 14 does not allow periodical reporting on the handover event (EVENT 1 C), the second base station does not meet the leaving triggering condition and when only the first base station is included in an active set after a handover event occurs with respect to the first and second base station. The system also includes the RNC 14 that wirelessly links the MT 11 to the second base station B by updating the active set of the MT 11, in response to the handover measurement report.

Further, as shown in FIG. 5, the MT 11 includes a physical layer 11C for measuring each signal strength received from the plurality of base stations 30, a radio link control (RLC) layer 11 B for transmitting/receiving a message for performing the handover operation between the MT 11 and base stations, and a radio resource control (RRC) layer 11 A for transmitting a handover measurement report to the RNC 14 through the RLC layer 11 B when a handover event occurs based on the signal strength measured at the physical layer 11C, and re-transmitting the measurement report informing about the handover event to the RNC 14 when the handover event reoccurs when a leaving triggering condition is not met.

Further, the RNC 14 analyzes the measurement report received from the RLC layer 11 B of the MT 11, and if the handover performing condition is met based on the analysis result, the RNC 14 transmits an active set update message (namely, a handover authentication message) to the RLC layer 11C. The MT 11 receives the active set update message through the RLC layer 11 B, and the RRC layer 11 A performs the handover operation according to the active set update message. After the MT 11 completes the handover operation, the MT 11 transmits an active set update complete message (namely, a handover complete message) to the RNC 14, thereby completing the handover operation of the MT 11.

Further, in the present invention, by defining a specific parameter (e.g., reporting interval, reporting amount, etc.) for a plurality of communication events not yet defined, besides the handover event, a message requesting a communication event can be re-transmitted.

As so far described, the method and system for triggering handover of the mobile terminal in accordance with the present invention have many advantages. For example, when there is no response to the handover message request during a pre-set time from the RNC, the message is re-transmitted, thereby preventing a call from being dropped. In addition, after the first base station and the mobile terminal are wirelessly linked, and when the signal strength of the second base station becomes the strongest at a time when the RNC 14 does not permit periodical reporting on the handover event (EVENT 1 C) and the second base station does not meet the leaving triggering condition, the mobile terminal transmits the measurement report including the second base station to the RNC, so that the mobile terminal is wirelessly linked with the second base station when the signal strengths of the other neighboring base stations are weak, thereby preventing a call from being dropped.

In addition, the mobile terminal can be applied in a mobile communication system such as the UMTS (Universal Mobile Telecommunications System), the WCDMA (Wideband Code Division Multiple Access) system, etc. Further, the handover operation is a soft handover in which the mobile terminal maintains communication with its original controlling base station until the communication has been completed with the new base station.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A method for triggering a handover event of a mobile terminal (11), said method comprising:
transmitting a handover request message from the mobile terminal (11) to a radio network controller (14), hereinafter called RNC, when a handover event occurs; and
re-transmitting the handover request message from the mobile terminal (11) to the RNC (14) if a response to the handover request message is not received from the RNC (14) during a pre-set time; **characterized in that**
the handover request message includes signal strengths of at least first and second base stations (12, 13), and the RNC (14) transmits an active set update message to the mobile terminal (11) including the first base station (13) having a higher signal strength than the second base station (12); and
the mobile terminal (11) re-transmits the handover request message including the signal strength of the second base station (12), if the signal strength of the second base station (12) becomes the strongest and if the RNC (14) has transmitted to the mobile terminal (11) the active set update message including the first base station (13) and does not allow a periodical report of the handover event to the second base station (12).

2. A communication system, comprising:
a mobile terminal (11) configured to transmit a handover request message, when a handover event occurs; and;
a plurality of base stations (12, 13) configured to control the mobile terminal (11) as the mobile terminal passes through the respective base stations (12, 13); and
a radio network controller (14), hereinafter called RNC, configured to control the plurality of base stations (12, 13) and the mobile terminal (11),
wherein the mobile terminal (11) is adapted to re-transmit the handover request message to the RNC (14) if a response to the handover request message is not received from the RNC (14) during a pre-set time, **characterized in that** the handover request message includes signal strengths of at least first and second base stations (12, 13), and the RNC (14) transmits an active set update message to the mobile terminal (11) including the first base station (13) having a higher signal strength than the second base station (12); and the mobile terminal (11) is adapted to re-transmit the handover request message including the signal strength of the second base station (12), if the signal strength of the second base station (12) becomes the strongest and if the RNC (14) has transmitted to the mobile terminal (11) the active set update message including the first base station (13) and does not allow a periodical report of the handover event to the second base station (12).

3. A mobile terminal comprising:
a physical layer for measuring signal strengths received from a plurality of base stations (12, 13);
a radio link control, hereinafter called RLC, layer adapted to transmit/receive a message to or from a radio network controller (14), hereinafter called RNC, requesting the mobile terminal (11) be handed over to a new base station (12, 13); and
a radio resource control, hereinafter called RRC, layer adapted to transmit a handover measurement report to the RNC (14) through the RLC layer when a handover event occurs based on a signal strength measured at the physical layer,
wherein the RRC layer is adapted to re-transmit the handover measurement report to the RNC (14) if a response to the handover request message is not received from the RNC (14) during a pre-set time,
**characterized in that** the handover request message includes signal strengths of at least first and second base stations (12, 13), and the RNC (14) transmits an active set update message to the mobile terminal (11) including the first base station (13) having a higher signal strength than the second base station (12) ; and
the RRC layer is adapted to re-transmit the handover request message including the signal strength of the second base station (12), if the signal strength of the second base station (12) becomes the strongest and if the RNC (14) has transmitted to the mobile terminal (11) the active set update message including the first base station (13) and does not allow a periodical report of the handover event to the second base station (12).

## Patentansprüche

1. Verfahren zum Auslösen eines Übergabeereignisses eines mobilen Endgeräts (11), wobei das Verfahren umfasst:
Senden einer Übergabeanforderungsnachricht vom mobilen Endgerät (11) zu einer Funknetzsteuereinrichtung (14), nachstehend als RNC bezeichnet, wenn ein Übergabeereignis auftritt; und
erneutes Senden der Übergabeanforderungsnachricht vom mobilen Endgerät (11) zur RNC (14), wenn innerhalb einer voreingestellten Zeit keine Antwort auf die Übergabeanforderungsnachricht vom RNC (14) empfangen wird; **dadurch gekennzeichnet, dass**
die Übergabeanforderungsnachricht die Signalstärken von wenigstens einer ersten und einer zweiten Basisstation (12, 13) umfasst, und die RNC (14) eine "Active set update"-Nachricht zum mobilen Endgerät (11) sendet, die die erste Basisstation (13), die eine höhere Signalstärke als die zweite Basisstation (12) aufweist, umfasst; und
das mobile Endgerät (11) erneut die Übergabeanforderungsnachricht sendet, die die Signalstärke der zweiten Basisstation (12) umfasst, wenn die Signalstärke der zweiten Basisstation (12) die stärkste wird und wenn die RNC (14) die "Active set update"-Nachricht zum mobilen Endgerät (11) gesendet hat, die die erste Basisstation (13) umfasst, und keinen periodischen Bericht des Übergabeereignisses zur zweiten Basisstation (12) ermöglicht.

2. Kommunikationssystem, das umfasst:
ein mobiles Endgerät (11), das konfiguriert ist, um eine Übergabeanforderungsnachricht zu senden, wenn ein Übergabeereignis auftritt; und
mehrere Basisstationen (12, 13), die konfiguriert sind, um das mobile Endgerät (11) zu steuern, wenn das mobile Endgerät die entsprechenden Basisstationen (12, 13) durchläuft; und
eine Funknetzsteuereinrichtung (14), nachstehend als RNC bezeichnet, die konfiguriert ist, um mehrere Basisstationen (12, 13) und das mobile Endgerät (11) zu steuern,
wobei das mobile Endgerät (11) ausgelegt ist, um die Übergabeanforderungsnachricht erneut zur RNC (14) zu senden, wenn von der RNC keine Antwort auf die Übergabeanforderungsnachricht innerhalb einer vorgegebenen Zeit empfangen wird, **dadurch gekennzeichnet, dass** die Übergabeanforderungsnachricht die Signalstärken von wenigstens einer ersten und einer zweiten Basisstation (12, 13) umfasst, und die RNC (14) eine "Active set update"-Nachricht zum mobilen Endgerät (11) sendet, die die erste Basisstation (13) umfasst, die eine höhere Signalstärke als die zweite Basisstation (12) aufweist; und das mobile Endgerät (11) ausgelegt ist, um erneut die Übergabeanforderungsnachricht zu senden, die die Signalstärke der zweiten Basisstation (12) umfasst, wenn die Signalstärke der zweiten Basisstation (12) die stärkste wird und wenn die RNC (14) die "Active set update"-Nachricht , die die erste Basisstation (13) umfasst, zum mobilen Endgerät (11) gesendet hat und keinen periodischen Bericht des Übergabeereignisses zur zweiten Basisstation (12) ermöglicht.

3. Mobiles Endgerät, das umfasst:
eine Bitübertragungsschicht zum Messen der Signalstärken, die von den mehreren Basisstationen (12, 13) empfangen werden;
eine Funkverbindungssteuerungsschicht, nachstehend als RLC-Schicht bezeichnet, die ausgelegt ist, um eine Nachricht zur Funknetzsteuereinrichtung (14), nachstehend als RNC bezeichnet, zu senden oder von ihr zu empfangen, die anfordert, dass das mobile Endgerät (11) an eine neue Basisstation (12, 13) übergeben wird; und
eine Funkbetriebsmittelsteuerungsschicht, nachstehend als RRC-Schicht bezeichnet, die ausgelegt ist, um einen Übergabemessbericht über die RLC-Schicht zur RNC (14) zu senden, wenn ein Übergabeereignis basierend auf der Signalstärke, die an der physikalischen Schicht gemessen wurde, auftritt,
wobei die RRC-Schicht ausgelegt ist, um den Übergabemessungsbericht erneut zur RNC (14) zu senden, wenn von der RNC (14) keine Antwort auf die Übergabeanforderungsnachricht innerhalb einer vorgegeben Zeit empfangen wird,
**dadurch gekennzeichnet, dass** die Übergabeanforderungsnachricht die Signalstärken von wenigstens einer ersten und einer zweiten Basisstation (12, 13) umfasst, und die RNC (14) eine "Active set update"-Nachricht zum mobilen Endgerät (11) sendet, die die erste Basisstation (13), die eine höhere Signalstärke als die zweite Basisstation (12) aufweist, umfasst; und
die RRC-Schicht ausgelegt ist, um erneut die Übergabeanforderungsnachricht zu senden, die die Signalstärke der zweiten Basisstation (12) umfasst, wenn die Signalstärke der zweiten Basisstation (12) die stärkste wird und wenn die RNC (14) die "Active set update"-Nachricht, die die erste Basisstation (13) umfasst, zum mobilen Endgerät (11) gesendet hat und keinen periodischen Bericht des Übergabeereignisses zur zweiten Basisstation (12) ermöglicht.

## Revendications

1. Procédé pour déclencher un événement de transfert d'un terminal mobile (11), ledit procédé comprenant :
la transmission d'un message de demande de transfert du terminal mobile (11) à un dispositif de commande de réseau radio, RNC, (14), lorsqu'un événement de transfert se produit ; et
la retransmission du message de demande de transfert du terminal mobile (11) au RNC (14) si une réponse au message de demande de transfert n'est pas reçue du RNC (14) au cours d'un temps préréglé ; **caractérisé en ce que**
le message de demande de transfert comprend des forces de signal d'au moins des première et deuxième stations de base (12, 13), et le RNC (14) transmet un message de mise à jour de réglage actif au terminal mobile (11) comprenant la première station de base (13) ayant une force de signal supérieure à la deuxième station de base (12) ; et
le terminal mobile (11) retransmet le message de demande de transfert comprenant la force de signal de la deuxième station de base (12), si la force de signal de la deuxième station de base (12) devient la plus grande et si le RNC (14) a transmis au terminal mobile (11) le message de mise à jour de réglage actif comprenant la première station de base (13) et n'autorise pas un rapport périodique de l'événement de transfert à la deuxième station de base (12).

2. Système de communication, comprenant :
un terminal mobile (11) configuré pour transmettre un message de demande de transfert, lorsqu'un événement de transfert se produit ; et
une pluralité de stations de base (12, 13) configurées pour commander le terminal mobile (11) pendant que le terminal mobile passe à travers les stations de base respectives (12, 13) ; et
un dispositif de commande de réseau radio, RNC, (14) configuré pour commander la pluralité de stations de base (12, 13) et le terminal mobile (11),
dans lequel le terminal mobile (11) est apte à effectuer la retransmission du message de demande de transfert au RNC (14) si une réponse au message de demande de transfert n'est pas reçue du RNC (14) au cours d'un temps préréglé, **caractérisé en ce que** le message de demande de transfert comprend des forces de signal d'au moins des première et deuxième stations de base (12, 13), et le RNC (14) transmet un message de mise à jour de réglage actif au terminal mobile (11) comprenant la première station de base (13) ayant une force de signal supérieure à la deuxième station de base (12) ; et le terminal mobile (11) est apte à effectuer la retransmission du message de demande de transfert comprenant la force de signal de la deuxième station de base (12), si la force de signal de la deuxième station de base (12) devient la plus grande et si le RNC (14) a transmis au terminal mobile (11) le message de mise à jour de réglage actif comprenant la première station de base (13) et n'autorise pas un rapport périodique de l'événement de transfert à la deuxième station de base (12).

3. Terminal mobile comprenant :
une couche physique pour mesurer des forces de signal reçues d'une pluralité de stations de base (12, 13) ;
une couche de commande de liaison radio, RLC, apte à effectuer la transmission/la réception d'un message à destination ou en provenance d'un dispositif de commande de réseau radio, RNC, (14), demandant le transfert du terminal mobile (11) à une nouvelle station de base (12, 13) ; et
une couche de commande de ressources radio, RRC, apte à effectuer la transmission d'un rapport de mesure de transfert au RNC (14) à travers la couche RLC lorsqu'un événement de transfert se produit sur la base d'une force de signal mesurée à la couche physique,
dans lequel la couche RRC est apte à effectuer la retransmission du rapport de mesure de transfert au RNC (14) si une réponse au message de demande de transfert n'est pas reçue du RNC (14) au cours d'un temps préréglé,
**caractérisé en ce que** le message de demande de transfert comprend des forces de signal d'au moins des première et deuxième stations de base (12, 13), et le RNC (14) transmet un message de mise à jour de réglage actif au terminal mobile (11) comprenant la première station de base (13) ayant une force de signal supérieure à la deuxième station de base (12) ; et
la couche RRC est apte à effectuer la retransmission du message de demande de transfert comprenant la force de signal de la deuxième station de base (12), si la force de signal de la deuxième station de base (12) devient la plus grande et si le RNC (14) a transmis au terminal mobile (11) le message de mise à jour de réglage actif comprenant la première station de base (13) et n'autorise pas un rapport périodique de l'événement de transfert à la deuxième station de base (12).
